(19)

Europäisches Patentamt
European Patent Office
Office européen des brevets

(11) **EP 4 372 949 A1**

(12) **EUROPEAN PATENT APPLICATION**
published in accordance with Art. 153(4) EPC

(43) Date of publication:
**22.05.2024 Bulletin 2024/21**

(21) Application number: **22914682.4**

(22) Date of filing: **26.12.2022**

(51) International Patent Classification (IPC):
***H02J 3/38*** (2006.01)

(52) Cooperative Patent Classification (CPC):
**H02J 3/38; H02J 3/46; H02M 1/08; Y02E 60/60**

(86) International application number:
**PCT/CN2022/141977**

(87) International publication number:
**WO 2023/125428 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 CN 202111613297**

(71) Applicants:
• **NR Electric Co., Ltd**
  **Nanjing, Jiangsu 211102 (CN)**
• **NR Engineering Co., Ltd.**
  **Nanjing, Jiangsu 211102 (CN)**

(72) Inventors:
• **WANG, Nannan**
  **Nanjing, Jiangsu 211102 (CN)**
• **LU, Yu**
  **Nanjing, Jiangsu 211102 (CN)**

• **DONG, Yunlong**
  **Nanjing, Jiangsu 211102 (CN)**
• **TIAN, Jie**
  **Nanjing, Jiangsu 211102 (CN)**
• **ZHAN, Changjiang**
  **Nanjing, Jiangsu 211102 (CN)**
• **LI, Haiying**
  **Nanjing, Jiangsu 211102 (CN)**
• **LI, Gang**
  **Nanjing, Jiangsu 211102 (CN)**
• **WANG, Xianrong**
  **Nanjing, Jiangsu 211102 (CN)**
• **LIN, Yizhe**
  **Nanjing, Jiangsu 211102 (CN)**
• **LI, Jianchun**
  **Nanjing, Jiangsu 211102 (CN)**

(74) Representative: **Kurig, Thomas**
  **Becker Kurig & Partner**
  **Patentanwälte mbB**
  **Bavariastraße 7**
  **80336 München (DE)**

(54) **CONVERTER CONTROL SYSTEM AND METHOD**

(57) The present application provides a converter control system and method for controlling a converter to mimic a synchronous generator. The converter control system comprises a power synchronization control unit, an alternating voltage reference vector calculation unit and an alternating voltage command generation unit. The power synchronization control unit is configured to mimic simulating a speed controller and a mechanical inertia link of a synchronous generator to generate a reference phase; the alternating voltage reference vector calculation unit acquires an internal potential vector and an alternating voltage vector to generate an alternating voltage reference vector; and the alternating voltage command generation unit generates a three-phase alternating voltage control command according to the alternating voltage reference vector and the reference phase. The converter control system and method provided by the present application can reduce the risk of oscillations without using current closed-loop control under steady-state and small perturbation conditions, and mimic grid support characteristics consistent with synchronous generators in both a steady state and a transient state, while realizing active adjustment of the impedance of the converter and improving grid adaptability.

Fig. 1a

**EP 4 372 949 A1**

**Description**

<u>Technical Field</u>

The present application relates to the technical field of power electronics, in particular to a converter control system and method.

<u>Background</u>

In order to achieve the carbon peaking and carbon neutrality goals, new energy and other non-synchronous machine sources will account for a very high proportion in a power grid of a future new power system. However, the current power system in China is not yet able to support the large-scale integration of new energy sources. The main reason is that as the penetration rate of new energy generation increases, the low inertia and lack of damping characteristics of power electronic converters will have a negative impact on the stable operation of the system, posing challenges to the stable operation of the grid. In the future new power system mainly featuring new energy sources, with the increasing integration of new energy sources with "zero" moment of inertia, stability issues related to power angle, voltage, frequency, and wideband resonance will arise.

Power electronic converters have the advantage of flexible control, but in weak systems with large-scale new energy sources, requirements for system support are imposed on the power electronic converters. In order to enable the power grid to have supporting capabilities, it is necessary to avoid the use of phase-locked loops and equip the power electronic converters with voltage source characteristics. A typical example is a voltage source converter employing amplitude-phase control (indirect current control) or power synchronization control (including virtual synchronous machine control).

CN106786733B and CN106356884B propose different forms of control systems for virtual synchronous generators, but both adopt current inner loops for converter control. In CN107528495B, direct current feedback is introduced to a virtual impedance loop to enhance the anti-impact capability of the converter. However, due to control delays, the direct current feedback in existing virtual synchronous generator control methods introduces harmonic components, leading to negative impedance in certain frequency bands, increasing the risk of oscillations. However, not adopting current closed-loop control would fail to address the issue of limited overcurrent capacity of the converter.

The above information disclosed in the background art section is only used to enhance the understanding of the background of the invention, so it may contain information that does not constitute the prior art known to those of ordinary skill in the art.

<u>Summary</u>

The present application aims to propose a converter control system and method which can maintain voltage source characteristics without using current closed-loop control under steady-state and small perturbation conditions, to achieve a reduction in the risk of oscillations, and to mimic grid support characteristics consistent with synchronous generators in both a steady state and a transient state, while realizing active adjustment of the impedance of the converter and improving grid adaptability.

According to one aspect of the present application, a converter control system is provided for controlling a converter to mimic a synchronous generator, and comprising a power synchronization control unit, an alternating voltage reference vector calculation unit and an alternating voltage command generation unit, wherein

the power synchronization control unit is configured to mimic a speed controller and a mechanical inertia link of a synchronous generator to generate a reference phase;

the alternating voltage reference vector calculation unit acquires an internal potential vector and an alternating voltage vector to generate an alternating voltage reference vector;

the alternating voltage command generation unit generates a three-phase alternating voltage control command according to the alternating voltage reference vector and the reference phase; and

the internal potential vector is determined according to characteristics of the mimicked synchronous generator.

According to some embodiments, the alternating voltage reference vector calculation unit is configured to:

according to a proportional coefficient $K_{rv}$, the internal potential vector $\mathbf{E_{dqpn}}$ and the alternating voltage vector

$Us_{dqpn}$, calculate the alternating voltage reference vector $Uc_{dqpn}$:

$$\mathbf{Uc_{dqpn}} = \mathbf{E_{dqpn}} + K_{rv}(\mathbf{Us_{dqpn}} - \mathbf{E_{dqpn}}) \; ;$$

the proportional coefficient $K_{rv}$ is determined according to a virtual impedance $X_v$ of the converter and a real impedance $X$, of the converter:

$$K_{rv} = \frac{X_v - X_r}{X_v}$$

the internal potential vector $\mathbf{E_{dqpn}}$, the alternating voltage vector $\mathbf{Us_{dqpn}}$ and the alternating voltage reference vector $\mathbf{Uc_{dqpn}}$ are all four-dimensional vectors, corresponding to dq axis components in positive and negative sequences; and

any vector $\mathbf{x_{dqpn}}$ is defined as: $\mathbf{x_{dqpn}} = [x_{dp}, x_{qp}, x_{dn}, x_{qn}]^T$, $x_{dp}$ is a positive sequence d-axis component, $x_{qp}$ is a positive sequence q-axis component, $x_{dn}$ is a negative sequence d-axis component, and $x_{qn}$ is a negative sequence d-axis component.

According to some embodiments, the alternating voltage reference vector calculation unit is configured to:

according to a proportional coefficient $K_{rv}$, the internal potential vector $\mathbf{E_{\alpha\beta pn}}$ and the alternating voltage vector $\mathbf{Us_{\alpha\beta pn}}$, calculate the alternating voltage reference vector $\mathbf{Uc_{\alpha\beta pn}}$:

$$\mathbf{Uc_{\alpha\beta pn}} = \mathbf{E_{\alpha\beta pn}} + K_{rv}\left(\mathbf{Us_{\alpha\beta pn}} - \mathbf{E_{\alpha\beta pn}}\right) \; ;$$

the proportional coefficient $K_{rv}$ is determined according to a virtual impedance $X_v$ of the converter and a real impedance $X$, of the converter:

$$K_{rv} = \frac{X_v - X_r}{X_v}$$

the internal potential vector $\mathbf{E_{\alpha\beta pn}}$, the alternating voltage vector $\mathbf{Us_{\alpha\beta pn}}$ and the alternating voltage reference vector $\mathbf{Uc_{\alpha\beta pn}}$ are all four-dimensional vectors, corresponding to $\alpha\beta$ axis components in positive and negative sequences; and

any vector $\mathbf{x_{\alpha\beta pn}}$ is defined as: $\mathbf{x_{\alpha\beta pn}} = [\mathbf{x_{\alpha p}}, \mathbf{x_{\beta p}}, \mathbf{x_{\alpha n}}, \mathbf{x_{\beta n}}]^T$, $\mathbf{x_{\alpha p}}$ is a positive sequence $\alpha$-axis component, $\mathbf{x_{\beta p}}$ is a positive sequence $\beta$-axis component, $\mathbf{x_{\alpha n}}$ is a negative sequence $\alpha$-axis component, and $\mathbf{x_{\beta n}}$ is a negative sequence $\beta$-axis component.

According to some embodiments, the virtual impedance $X_v$ is configured to simulat impedance of the generator:

in steady-state operation, the virtual impedance $X_v$ is 0 to 1 times of a rated impedance; and

in transient-state operation, the virtual impedance $X_v$ is increased to keep an internal potential stable.

According to some embodiments, further comprising an alternating voltage control unit AVR configured to realize alternating voltage regulation of a grid connection point of the converter and output a positive sequence d-axis component $E_{dp}$ of an internal potential, and a positive sequence q-axis component $E_{qp}$, a negative sequence d-axis component $E_{dn}$ and a negative sequence q-axis component $E_{qn}$ of the internal potential are 0.

According to some embodiments, a control error compensation unit is further provided and configured to:

according to a deviation between the alternating voltage reference vector $\mathbf{Uc_{dqpn}}$ and an actual alternating voltage vector $\mathbf{Uc_{dppn\_m}}$ of the converter, generate a control error compensation value; and

add the control error compensation value to the alternating voltage reference vector $\mathbf{Uc_{dqpn}}$ to obtain the alternating voltage reference vector of the converter.

According to some embodiments, a fault current limiting unit is further provided,
the fault current limiting unit is activated during a transient overcurrent state to generate a fault current limiting control value according to a deviation between an alternating current limiting command and an actual alternating current of the converter, the fault current limiting control value is added to the alternating voltage reference vector $\mathbf{Uc_{dqpn}}$ to serve as the alternating voltage reference vector of the converter, so as to control an alternating current amplitude to be a maximum alternating current amplitude limit Imax, and a direction thereof is 90 degrees behind a voltage drop of the virtual impedance $X_v$.

According to some embodiments, the fault current limiting unit is configured to be activated for a short time during a transient overcurrent state, and the short time is specifically 1 ms-1 s.

According to some embodiments, the control system is configured to be used for at least one of a DC transmission converter, an energy storage converter, a microgrid converter, a photovoltaic inverter and a wind power converter.

According to another aspect of the present application, a converter control method is provided for controlling a converter to mimic a synchronous generator, using the converter control system as described in any one of the preceding statements, and comprising:

> simulating, by the power synchronization control unit, a speed controller and a mechanical inertia link of a generator to generate a reference phase;

> acquiring, by the alternating voltage reference vector calculation unit, an internal potential vector and an alternating voltage vector to generate an alternating voltage reference vector; and

> generating, by the alternating voltage command generation unit, a three-phase alternating voltage control command according to the alternating voltage reference vector and the reference phase;

> wherein, the internal potential vector is determined according to characteristics of the mimicked synchronous generator.

According to some embodiments, the alternating voltage reference vector calculation unit is configured to:

> according to a proportional coefficient $K_{rv}$, the internal potential vector $E_{dqpn}$ and the alternating voltage vector $\mathbf{Us_{dqpn}}$, calculate the alternating voltage reference vector $\mathbf{Uc_{dqpn}}$:

$$\mathbf{Uc_{dqpn}} = \mathbf{E_{dqpn}} + K_{rv}(\mathbf{Us_{dqpn}} - \mathbf{E_{dqpn}})$$

> the proportional coefficient $K_{rv}$ is determined according to a virtual impedance $X_v$ of the converter and a real impedance $X_r$ of the converter:

$$K_{rv} = \frac{X_v - X_r}{X_v}$$

> the virtual impedance Xv is used for simulating impedance of the generator; in steady-state operation, the virtual impedance $X_v$ is 0 to 1 times of a rated impedance; and in transient-state operation, the virtual impedance $X_v$ is increased to keep the internal potential stable.

According to some embodiments, the alternating voltage reference vector calculation unit is configured to:

> according to a proportional coefficient $K_{rv}$, the internal potential vector $\mathbf{E_{\alpha\beta pn}}$ and the alternating voltage vector $\mathbf{Us_{\alpha\beta pn}}$, calculate the alternating voltage reference vector $\mathbf{Uc_{\alpha\beta pn}}$:

$$\mathbf{Uc_{\alpha\beta pn}} = \mathbf{E_{\alpha\beta pn}} + K_{rv}\left(\mathbf{Us_{\alpha\beta pn}} - \mathbf{E_{\alpha\beta pn}}\right) ;$$

> the proportional coefficient $K_{rv}$ is determined according to a virtual impedance $X_v$ of the converter and a real impedance $X_r$ of the converter:

$$K_{rv} = \frac{X_v - X_r}{X_v}$$

the internal potential vector $\mathbf{E}_{\alpha\beta\mathbf{pn}}$, the alternating voltage vector $\mathbf{Us}_{\alpha\beta\mathbf{pn}}$ and the alternating voltage reference vector $\mathbf{Uc}_{\alpha\beta\mathbf{pn}}$ are all four-dimensional vectors, corresponding to $\alpha\beta$ axis components in positive and negative sequences; and

any vector $\mathbf{x}_{\alpha\beta\mathbf{pn}}$ is defined as: $\mathbf{x}_{\alpha\beta\mathbf{pn}} = [\mathbf{x}_{\mathbf{ap}}, \mathbf{x}_{\beta\mathbf{p}}, \mathbf{x}_{\alpha\mathbf{n}}, \mathbf{x}_{\beta\mathbf{n}}]^T$, $\mathbf{x}_{\alpha\mathbf{p}}$ is a positive sequence $\alpha$-axis component, $\mathbf{x}_{\beta\mathbf{p}}$ is a positive sequence $\beta$-axis component, $\mathbf{x}_{\alpha\mathbf{n}}$ is a negative sequence $\alpha$-axis component, and $\mathbf{x}_{\beta\mathbf{n}}$ is a negative sequence $\beta$-axis component.

According to some embodiments, the method further comprises:
realizing, by an alternating voltage control unit AVR, alternating voltage regulation of a grid connection point of the converter and outputting a positive sequence d-axis component $E_{dp}$ of an internal potential, and a positive sequence q-axis component $E_{qp}$, a negative sequence d-axis component $E_{dn}$ and a negative sequence q-axis component $E_{qn}$ of the internal potential are 0.

According to some embodiments, the converter control method further comprise performing the following operations by a control error compensation unit:

according to a deviation between the alternating voltage reference vector $\mathbf{Uc}_{\mathbf{dqpn}}$ and an actual alternating voltage vector $\mathbf{Uc}_{\mathbf{dppn\_m}}$ of the converter, generating a control error compensation value; and

adding the control error compensation value to the alternating voltage reference vector $\mathbf{Uc}_{\mathbf{dqpn}}$ to obtain the alternating voltage reference vector of the converter.

According to some embodiments, the converter control method further comprises:
activating a fault current limiting unit during a transient overcurrent state to generate a fault current limiting control value according to a deviation between an alternating current limiting command and an actual alternating current of the converter, which is added to the alternating voltage reference vector $\mathbf{Uc}_{\mathbf{dqpn}}$ to serve as the alternating voltage reference vector of the converter, so as to control an alternating current amplitude to be a maximum alternating current amplitude limit Imax, wherein a direction thereof is 90 degrees behind a voltage drop of the virtual impedance $X_v$.

According to some embodiments, the fault current limiting unit is configured to be activated for a short time during a transient overcurrent state, and the short time is specifically 1 ms-1 s.

According to another aspect of the present application, a program product is provided, comprising the converter control system as described in any one of the preceding statements.

According to another aspect of the present application, an electronic device is provided, comprising the program product as described above.

The technical scheme according to some embodiments of the present application may have one or more of the following beneficial effects.

1. The converter control system and method provided by the present application do not adopt current closed-loop control under steady-state and small perturbation conditions, effectively reducing the risk of oscillations.

2. The converter control system and method provided by the present application can mimic grid support characteristics consistent with synchronous generators.

3. The converter control system and method provided by the present application can realize active adjustment of the virtual impedance of the converter without using current closed-loop control, improve grid adaptability, and reduce fault currents in a fault condition.

4. The converter control system and method provided by the present application do not require the configuration of a fault current limiting unit when the overcurrent capability of the converter is satisfactory. When the overcurrent capability of the converter is lower than a fault current, the converter enters transient operation after a fault overcurrent, and the fault current limiting unit is engaged to avoid overcurrent tripping, enabling adaptability to converters with different capabilities.

It should be understood that the above general description and the following detailed description are only exemplary, and do not limit the application.

Brief Description of the Drawings

The above and other objects, features and advantages of the application will become more apparent by describing in detail exemplary embodiments with reference to the accompanying drawings. The drawings described below only illustrate some embodiments of the application, and do not limit the application.

Fig. 1a is a block diagram of a converter control system according to an exemplary embodiment of the present application;
Fig. 1b is a block diagram of an implementation method of a converter control system according to an exemplary embodiment of the present application;
Fig. 2 is a positive sequence vector diagram in which a converter control system in an exemplary embodiment of the present application realizes converter control;
Fig. 3a is a schematic diagram of an alternating voltage control unit AVR according to an exemplary embodiment of the present application;
Fig. 3b is a block diagram of an implementation method of an alternating voltage control unit AVR according to an exemplary embodiment of the present application;
Fig. 4 shows another embodiment of a block diagram of a converter control system exemplified by the present application;
Fig. 5 is a block diagram of a control error compensation unit according to an exemplary embodiment of the present application;
Fig. 6 is a block diagram of a fault current limiting unit according to an exemplary embodiment of the present application;
Fig. 7 is a flowchart of a converter control method according to an exemplary embodiment of the present application; and
Figs. 8a and 8b are fault ride-through effect diagrams of a converter control method according to an exemplary embodiment of the present application.

Detailed Description of Embodiments

Exemplary embodiments will now be described more fully with reference to the accompanying drawings. However, the exemplary embodiments can be implemented in various forms and should not be construed as limited to the embodiments set forth herein. These embodiments are provided to make this application more thorough and complete, and to fully convey the concept of the exemplary embodiments to those skilled in the art. In the drawings, the same reference numerals refer to the same or similar parts, so repeated descriptions will be omitted.

The described features, structures, or characteristics may be combined in any suitable manner in one or more embodiments. In the following description, numerous specific details are provided to give a thorough understanding of the embodiments of the disclosure. However, those skilled in the art will realize that the technical solution of the disclosure can be practiced without one or more of these specific details, or other ways, components, materials or devices can be adopted. In these cases, well-known structures, methods, devices, implementations, materials or operations will not be shown or described in detail.

The flowchart shown in the drawings is only an exemplary illustration, and does not necessarily include all contents and operations/steps, nor does it have to be executed in the described order. For example, some operations/steps can be decomposed, while others can be merged or partially merged, so the actual execution order may change according to the actual situation.

Terms such as "first" and "second" in the specification and claims of this application and the drawings are used to distinguish different objects, but not to describe a specific order. Further, the terms "comprise" and "have" and any variations thereof are intended to cover non-exclusive inclusion. For example, a process, method, system, product or device comprising a series of steps or units is not limited to the listed steps or units, but optionally comprises steps or units not listed, or optionally comprises other steps or units inherent to the process, method, product or device.

Those skilled in the art can understand that the drawings are only diagrams of the exemplary embodiments. The modules or processes in the drawings are not necessarily a must for the implementation of this application, so they cannot be used to limit the scope of protection of this application.

A device embodiment of the application is described below, which can be used to execute the method embodiment of the application. For details not disclosed in the device embodiment of the application, please refer to the method embodiment of the application.

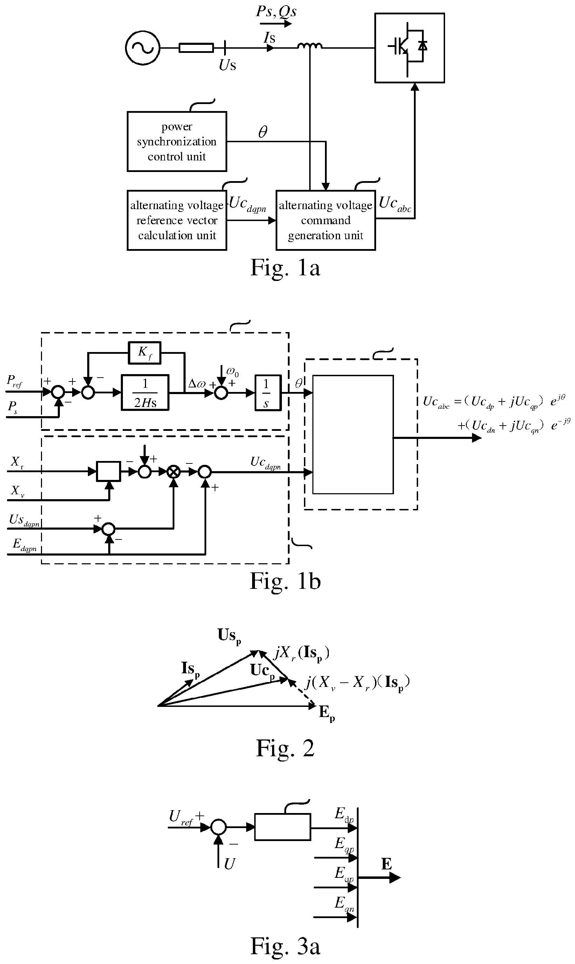

Fig. 1a is a block diagram of a converter control system according to an exemplary embodiment of the present application.

As shown in Fig. 1a, a converter control system is configured to control a converter to mimic a synchronous generator, and comprise a power synchronization control unit 1, an alternating voltage reference vector calculation unit 2 and an alternating voltage command generation unit 3. The power synchronization control unit 1 is configured to mimic a speed controller and a mechanical inertia link of a generator to generate a reference phase θ; the alternating voltage reference vector calculation unit 2 is configured to calculate an alternating voltage reference vector $Uc_{dqpn}$ of the converter; and the alternating voltage command generation unit 3 generates a three-phase alternating voltage control command $Uc_{abc}$ according to the alternating voltage reference vector $Uc_{dqpn}$ and the reference phase θ.

Fig. 1b is a block diagram of an implementation method of a converter control system according to an exemplary embodiment of the present application.

Fig. 1b shows a detailed implementation method of a converter control system provided by the present invention. The power synchronization control unit 1 adopts a generator swing equation shown in Formula (1) to mimic the speed controller and the mechanical inertia link of the generator, where $\omega$ is an angular velocity, $H$ is an inertia time constant, $P_{ref}$ is an active command, $P_s$ is an electromagnetic active power, $K_f$ is a proportional coefficient of the speed controller, and $\Delta\omega$ is an angular velocity deviation.

$$\begin{cases} \dfrac{d\theta}{dt} = \omega \\ 2H\dfrac{d\omega}{dt} = P_{ref} - P_s - K_f\Delta\omega \end{cases} \tag{1}$$

The alternating voltage reference vector calculation unit 2 calculates the alternating voltage reference vector $\mathbf{Uc_{dqpn}}$ of the converter according to the proportional coefficient $K_{rv}$, an internal potential vector $\mathbf{E_{dqpn}}$ and an acquired alternating voltage vector $\mathbf{Us_{dqpn}}$:

$$\mathbf{Uc_{dqpn}} = \mathbf{E_{dqpn}} + K_{rv}(\mathbf{Us_{dqpn}} - \mathbf{E_{dqpn}}) \tag{2}$$

where the proportional coefficient $K_{rv}$ is determined according to a virtual impedance $X_v$ of the converter and a real impedance $X$, of the converter:

$$K_{rv} = \frac{X_v - X_r}{X_v} \tag{3}$$

$\mathbf{E_{dqpn}}$, $\mathbf{Us_{dqpn}}$ and $\mathbf{Uc_{dqpn}}$ are all four-dimensional vectors, corresponding to dq axis components in positive and negative sequences; and any vector $\mathbf{x}$ is defined as: $\mathbf{x_{dqpn}} = [x_{dp}, x_{qp}, x_{dn}, x_{qn}]^T$, $x_{dp}$ is a positive sequence d-axis component, $x_{qp}$ is a positive sequence q-axis component, $x_{dn}$ is a negative sequence d-axis component, and $x_{qn}$ is a negative sequence d-axis component.

The alternating voltage command generation unit 3 obtains the synthesized three-phase alternating voltage control command vector $Uc_{abc}$ according to the positive and negative sequence components in the alternating voltage reference vector $Uc_{dqpn}$ and the reference phase θ:

$$Uc_{abc} = (Uc_{dp} + jUc_{qp})\ e^{j\theta} + (Uc_{dn} + jUc_{qn})\ e^{-j\theta} \tag{4}$$

According to Formula (4), the three-phase alternating voltage control command can be obtained as follows:

$$\begin{cases} Uc_a = Uc_p \cos(\theta + \theta_p) + Uc_n \cos(\theta + \theta_n) \\ Uc_b = Uc_p \cos(\theta + \theta_p - \frac{2}{3}\pi) + Uc_n \cos(\theta + \theta_n + \frac{2}{3}\pi) \\ Uc_b = Uc_p \cos(\theta + \theta_p + \frac{2}{3}\pi) + Uc_n \cos(\theta + \theta_n - \frac{2}{3}\pi) \end{cases} \tag{5}$$

where

$$\begin{cases} Uc_p = \sqrt{Uc_{dp}^2 + Uc_{qp}^2} \\ \theta_p = \operatorname{atan}(\frac{Uc_{qp}}{Uc_{dp}}) \\ Uc_n = \sqrt{Uc_{dn}^2 + Uc_{qn}^2} \\ \theta_n = \operatorname{atan}(\frac{Uc_{qn}}{Uc_{dn}}) \end{cases} \tag{6}$$

Fig. 2 is a positive sequence vector diagram in which a converter control system in an exemplary embodiment of the present application realizes converter control.

As shown in Fig. 2, $\mathbf{E_p}=E_{dp}+j0$ is a positive sequence vector of an internal potential, $\mathbf{Us_p}=Us_{dp}+jUs_{qp}$ is a positive sequence vector of alternating voltage, $\mathbf{Uc_p}=Uc_{dp}+jUc_{qp}$ is a positive sequence vector of an alternating voltage reference value, and $\mathbf{Is_p}=Is_{dp}+jIs_{qp}$ is a positive sequence vector of alternating current. The above vectors are relative to the reference phase θ. In a voltage source control mode, $\mathbf{Is_p}$ represents current flowing through the virtual impedance $X_v$, which will lag behind a voltage drop $\mathbf{Us_p}\text{-}\mathbf{E_p}$ across an inductor by 90 degrees according to inductance characteristics, so:

$$\mathbf{Us_p} - \mathbf{E_p} = jX_v\mathbf{Is_p} \tag{7}$$

For the real impedance $X$, of the converter, the inductance characteristics are also satisfied:

$$\mathbf{Us_p} - \mathbf{Uc_p} = jX_r\mathbf{Is_p} \tag{8}$$

It can be seen from Formulas (7) and (8) that $\mathbf{Is_p}$ is eliminated, and thus $Uc_p$ is calculated according to $\mathbf{Us_p}$, $\mathbf{E_p}$, $X_v$ and $X_r$, namely:

$$\mathbf{Uc_p} = \mathbf{Us_p} - \frac{X_r}{X_v}(\mathbf{Us_p} - \mathbf{E_p}) = \mathbf{E_p} + \frac{X_v - X_r}{X_v}(\mathbf{Us_p} - \mathbf{E_p}) \tag{9}$$

Similarly, the relationship between negative sequence vectors can also be obtained as follows:

$$\mathbf{Uc_n} = \mathbf{Us_n} - \frac{X_r}{X_v}(\mathbf{Us_n} - \mathbf{E_n}) = \mathbf{E_n} + \frac{X_v - X_r}{X_v}(\mathbf{Us_n} - \mathbf{E_n}) \tag{10}$$

where $\mathbf{E_n}$=0 is a negative sequence vector of the internal potential, $\mathbf{Us_n}=Us_{dn}+jUs_{qn}$ is a negative sequence vector of the alternating voltage, $\mathbf{Uc_n}=Uc_{dn}+jUc_{qn}$ is a negative sequence vector of the alternating voltage reference value, and

$\mathbf{Is_n}=Is_{dn}+jIs_{qn}$ is a negative sequence vector of the alternating current. The above vectors are relative to the reference phase $\theta$.

Formula (2) can be obtained from Formulas (9) and (10). By using Formula (2) to calculate the alternating voltage reference vector $\mathbf{Uc_{dqpn}}$, alternating current signals are avoided, so the risk of oscillations can be effectively reduced. Because a vector diagram is consistent with the synchronous generator, grid support characteristics consistent with the synchronous generator can be mimicked.

Different generator impedances can be mimicked by adjusting the virtual impedance $X_v$. In steady-state operation, the virtual impedance $X_v$ is 0 to 1 times of a rated impedance, and it is preferable to make the virtual impedance $X_v$ equal to the real impedance xr; and when an overcurrent is caused by a large perturbation such as a fault, the converter enters a transient operation state, and the internal potential of the converter is kept stable by increasing the virtual impedance $X_v$, that is, when $\mathbf{Us_p}$ or $\mathbf{Us_n}$ changes greatly, by increasing the virtual impedance $X_v$, the vector relationship shown in Fig. 2 or an equivalent negative sequence vector relationship enables the simulation of different generator impedances.

Fig. 3a is a schematic diagram of an alternating voltage control unit AVR according to an exemplary embodiment of the present application.

As shown in Fig. 3a, a schematic diagram of an alternating voltage control unit AVR is provided. The alternating voltage control unit AVR is used for realizing alternating voltage regulation of a grid connection point of the converter. Through a deviation between an alternating voltage command value $U_{ref}$ and an alternating voltage actual value U, a positive sequence d-axis component $E_{dp}$ of the internal potential is calculated by the AVR unit 31. According to generator characteristics, a positive sequence q-axis component $E_{dp}$, a negative sequence d-axis component $E_{dn}$ and a negative sequence q-axis component $E_{qn}$ of the internal potential are all 0.

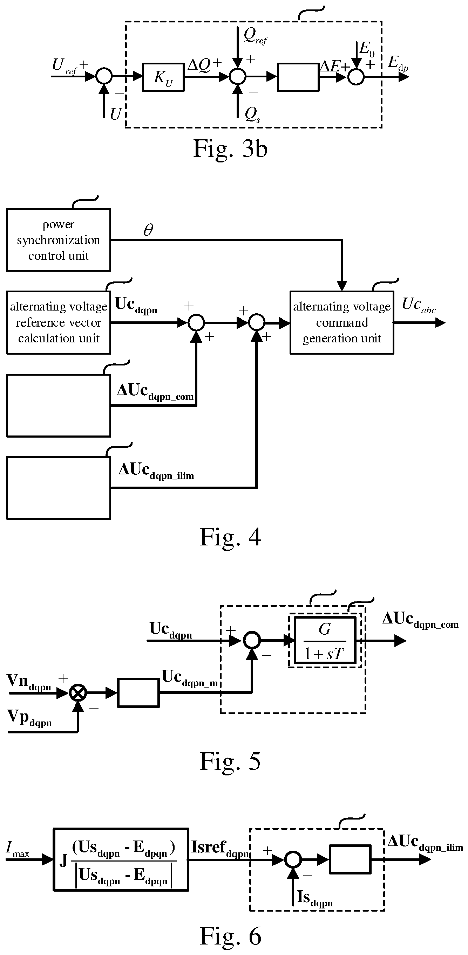

Fig. 3b is a block diagram of an implementation method of an alternating voltage control unit AVR according to an exemplary embodiment of the present application.

Fig. 3b is a detailed embodiment of an AVR unit 31 provided by the present application. The deviation between the alternating voltage command value $U_{ref}$ and the alternating voltage actual value U is multiplied by a voltage droop coefficient $K_U$ to obtain a reactive power regulation value $\Delta Q$. A reactive power command $Q_{ref}$ is added to the reactive power regulation value $\Delta Q$ and then subtracted from reactive power $Q_s$ of the converter to obtain an alternating voltage regulation value $\Delta E$ through a PI controller. The alternating voltage regulation value $\Delta E$ is added to a rated alternating voltage $E_0$ to obtain the positive sequence d-axis component $E_{dp}$ of the internal potential.

Fig. 4 shows another embodiment of a block diagram of a converter control system exemplified by the present application.

As shown in Fig. 4, the converter control system also comprises a control error compensation unit 4 and a fault current limiting unit 5. Due to control delays, capacitor voltage fluctuations and other factors, a deviation exists between an actual output voltage of the converter and the reference vector $\mathbf{Uc_{dqpn}}$. Preferably, the control error compensation unit 4 can be additionally arranged to reduce this deviation. According to the deviation between the alternating voltage reference vector $\mathbf{Uc_{dqpn}}$ and an actual alternating voltage vector of the converter, a control error compensation value $\Delta\mathbf{Uc_{dqpn\_com}}$ is generated, which is added to the alternating voltage reference vector $\mathbf{Uc_{dqpn}}$ to serve as the alternating voltage reference vector of the converter.

When the overcurrent capacity of the converter is limited, it is preferable to add the fault current limiting unit 5, which can be activated during a transient overcurrent state and generate a fault current limiting control value $\Delta\mathbf{Uc_{dqpn\_ilim}}$ according to a deviation between an alternating current limiting command and an actual alternating current of the converter, which is added to the original alternating voltage reference vector of the converter to serve as the alternating voltage reference vector of the converter. In this way, an alternating current amplitude is near a maximum alternating current amplitude limit $I_{max}$, avoiding overcurrent tripping of the converter. An amplitude of an alternating voltage limit command is $I_{max}$, and a direction is 90 degrees behind a voltage drop on the virtual impedance.

Fig. 5 is a block diagram of a control error compensation unit according to an exemplary embodiment of the present application.

As shown in Fig. 5, the control error compensation unit 4 is used for control error compensation of a modular multilevel converter. According to an acquired three-phase lower-bridge arm voltage, by positive and negative sequence decomposition and Park's transformation, a lower-bridge arm positive and negative sequence dq axis vector $\mathbf{Vn_{dqpn}}$ is obtained. According to an acquired three-phase upper-bridge arm voltage, by positive and negative sequence decomposition and Park's transformation, an upper-bridge arm positive and negative sequence dq axis vector $\mathbf{Vp_{dqpn}}$ is obtained. Subtracting $\mathbf{Vp_{dqpn}}$ from $\mathbf{Vn_{dqpn}}$ and multiplying by 0.5, the actual alternating voltage vector of the converter $\mathbf{Uc_{dqpn\_m}}$ is obtained. Subtracting $\mathbf{Uc_{dqpn\_m}}$ from the alternating voltage reference vector $\mathbf{Uc_{dqpn}}$, the control error compensation value $\Delta\mathbf{Uc_{dqpn\_com}}$ is obtained through a first-order inertia link 41. The control error compensation value is added to the alternating voltage reference vector $\mathbf{Uc_{dqpn}}$ to serve as the alternating voltage reference vector of the converter, so as to minimize the error between the alternating voltage reference vector $\mathbf{Uc_{dqpn}}$ and the actual alternating voltage vector of the converter $\mathbf{Uc_{dqpn\_m}}$.

Fig. 6 is a block diagram of a fault current limiting unit according to an exemplary embodiment of the present application.

Fig. 6 is a detailed embodiment of the fault current limiting unit 5. Because the voltage drop on the virtual impedance is $\mathbf{Us_{dqpn}}$-$\mathbf{E_{dqpn}}$, and the amplitude of the alternating current limiting command $\mathbf{Isref_{dqpn}}$ is $I_{max}$, which lags behind the voltage drop on the virtual impedance by 90 degrees,

$$\mathbf{Isref_{dqpn}} = I_{\max}\mathbf{J}\frac{\mathbf{Us_{dqpn}} - \mathbf{E_{dqpn}}}{\left|\mathbf{Us_{dqpn}} - \mathbf{E_{dqpn}}\right|} \qquad (11)$$

where $\mathbf{J}$ is a 90-degree lag operator of a four-dimensional vector and satisfies:

$$\mathbf{J} = \begin{bmatrix} 0 & -1 & 0 & 0 \\ 1 & 0 & 0 & 0 \\ 0 & 0 & 0 & 1 \\ 0 & 0 & -1 & 0 \end{bmatrix} \qquad (12)$$

The fault current limiting control value $\Delta\mathbf{Uc_{dqpn\_ilim}}$ is obtained from the deviation between the alternating current limiting command $\mathbf{Isref_{dqpn}}$ and the actual alternating current of the converter $\mathbf{Is_{dqpn}}$ through the PI controller, which is added to the original alternating voltage reference vector of the converter to serve as the alternating voltage reference vector of the converter, so that the alternating current amplitude is near the maximum alternating current amplitude limit $I_{max}$. The fault current limiting unit 5 can be configured to be activated for a short time during a transient overcurrent state only, and the short time is specifically 1 ms-1 s.

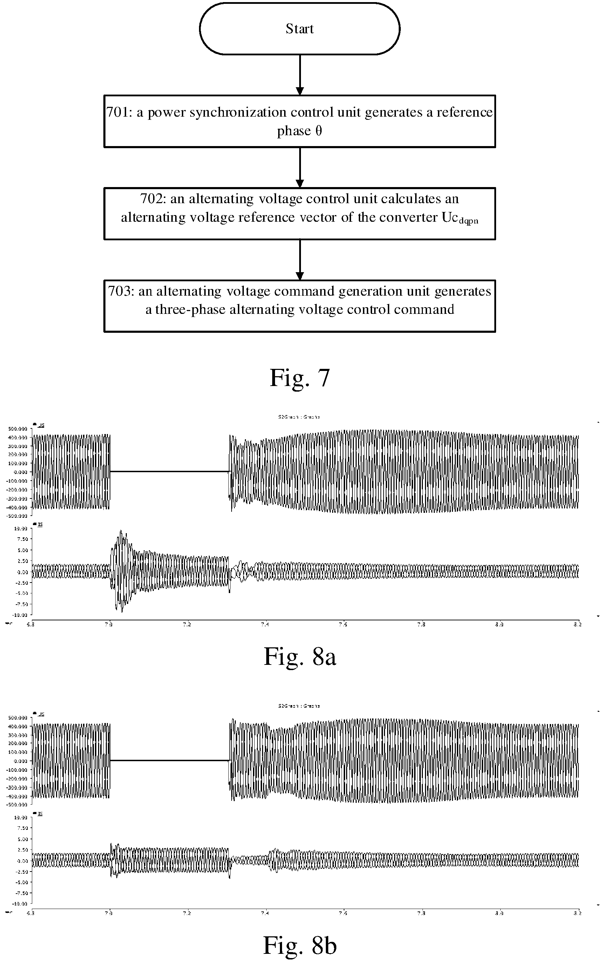

Fig. 7 is a flowchart of a converter control method according to an exemplary embodiment of the present application.

In step 701, a power synchronization control unit generates a reference phase θ.

According to Formula (1), the reference phase θ is generated, and a speed controller and a mechanical inertia link of a generator are mimicked.

In step 702, an alternating voltage control unit calculates an alternating voltage reference vector of the converter $\mathbf{Uc_{dqpn}}$.

According to Formula (2), the alternating voltage reference vector of the converter $\mathbf{Uc_{dqpn}}$ is calculated according to a proportional coefficient $K_{rv}$, an internal potential $\mathbf{E_{dqpn}}$ and an acquired alternating voltage vector $\mathbf{Us_{dqpn}}$:

In step 703, an alternating voltage command generation unit generates a three-phase alternating voltage control command.

According to the alternating voltage reference vector $\mathbf{Uc_{dqpn}}$ and the reference phase θ, the three-phase alternating voltage control command is obtained according to Formula (5).

Figs. 8a and 8b are fault ride-through effect diagrams of a converter control method according to an exemplary embodiment of the present application.

Fig. 8a shows a fault ride-through effect when the control system shown in Fig. 1a is adopted, where current closed-loop control is not used in the whole steady-state and fault transient-state processes, and initial current is relatively large. By increasing the virtual impedance, after about 50 ms, alternating current is around 1.2 times the rated current of the maximum alternating current amplitude limit. Therefore, the generator characteristics can be completely mimicked without introducing current closed-loop control, but it requires a certain capability to withstand short-term overloads in the converter.

Fig. 8b shows a fault ride-through effect when the control system shown in Fig. 4 is adopted, where a control error compensation unit is provided, and during the fault transient period, a fault current limiting unit is temporarily activated. After a fault occurs, the alternating current can be quickly reduced to 1.2 times the rated current of the maximum alternating current amplitude limit. Because a current command of the fault current limiting unit is consistent with the current of the generator, the generator characteristics can still be well mimicked.

In the above embodiment, vectors are represented by the dq axis components. Vectors can also be represented by αβ components. The corresponding relationship is as follows:

$$\begin{cases} x_{\alpha p} + jx_{\beta p} = e^{j\theta}(x_{dp} + jx_{dp}) \\ x_{\alpha n} + jx_{\beta n} = e^{-j\theta}(x_{dn} + jx_{dn}) \end{cases} \tag{13}$$

It should be clearly understood that this application describes how to form and use specific examples, but this application is not limited to any details of these examples. On the contrary, based on the teachings of the disclosure, these principles can be applied to many other embodiments.

In addition, it should be noted that the above drawings only illustrate processes included in the method according to the exemplary embodiments of the application, and are not for limiting purposes. It is easy to understand that the processes shown in the above figures do not indicate or limit the time sequence of these processes. In addition, it is also easy to understand that these processes can be performed synchronously or asynchronously in multiple modules, for example.

Exemplary embodiments of the application have been particularly shown and described above. It should be understood that this application is not limited to the detailed structure, arrangement or implementation described here; on the contrary, this application is intended to cover various modifications and equivalent arrangements included within the spirit and scope of the appended claims.

## Claims

1. A converter control system, being configured to control a converter to mimic a synchronous generator, and comprising a power synchronization control unit, an alternating voltage reference vector calculation unit and an alternating voltage command generation unit, wherein

   the power synchronization control unit is configured to mimic a speed controller and a mechanical inertia link of a synchronous generator to generate a reference phase;
   the alternating voltage reference vector calculation unit acquires an internal potential vector and an alternating voltage vector to generate an alternating voltage reference vector;
   the alternating voltage command generation unit generates a three-phase alternating voltage control command according to the alternating voltage reference vector and the reference phase; and
   the internal potential vector is determined according to characteristics of the mimicked synchronous generator.

2. The control system according to claim 1, wherein the alternating voltage reference vector calculation unit is configured to:

   according to a proportional coefficient $K_{rv}$, the internal potential vector $\mathbf{E_{dqpn}}$ and the alternating voltage vector $\mathbf{Us_{dqpn}}$, calculate the alternating voltage reference vector $\mathbf{Uc_{dqpn}}$:

$$\mathbf{Uc_{dqpn}} = \mathbf{E_{dqpn}} + K_{rv}(\mathbf{Us_{dqpn}} - \mathbf{E_{dqpn}})_;$$

   the proportional coefficient $K_{rv}$ is determined according to a virtual impedance $X_v$ of the converter and a real impedance $X_r$ of the converter:

$$K_{rv} = \frac{X_v - X_r}{X_v}$$

   the internal potential vector $\mathbf{E_{dqpn}}$, the alternating voltage vector $\mathbf{Us_{dqpn}}$ and the alternating voltage reference vector $\mathbf{Uc_{dqpn}}$ are all four-dimensional vectors, corresponding to dq axis components in positive and negative sequences; and
   any vector $\mathbf{x_{dqpn}}$ is defined as: $\mathbf{x_{dqpn}} = [x_{dp}, x_{qp}, x_{dn}, x_{qn}]^T$, $x_{dp}$ is a positive sequence d-axis component, $x_{qp}$ is a positive sequence q-axis component, $x_{dn}$ is a negative sequence d-axis component, and $x_{qn}$ is a negative sequence d-axis component.

3. The control system according to claim 1, wherein the alternating voltage reference vector calculation unit is configured to:

according to a proportional coefficient $K_{rv}$, the internal potential vector $\mathbf{E}_{\alpha\beta\mathbf{pn}}$ and the alternating voltage vector $\mathbf{Us}_{\alpha\beta\mathbf{pn}}$, calculate the alternating voltage reference vector $\mathbf{Uc}_{\alpha\beta\mathbf{pn}}$:

$$\mathbf{Uc}_{\alpha\beta\mathbf{pn}} = \mathbf{E}_{\alpha\beta\mathbf{pn}} + K_{rv}\left(\mathbf{Us}_{\alpha\beta\mathbf{pn}} - \mathbf{E}_{\alpha\beta\mathbf{pn}}\right);$$

the proportional coefficient $K_{rv}$ is determined according to a virtual impedance $X_v$ of the converter and a real impedance $X$, of the converter:

$$K_{rv} = \frac{X_v - X_r}{X_v}$$

the internal potential vector $\mathbf{E}_{\alpha\beta\mathbf{pn}}$, the alternating voltage vector $\mathbf{Us}_{\alpha\beta\mathbf{pn}}$ and the alternating voltage reference vector $\mathbf{Uc}_{\alpha\beta\mathbf{pn}}$ are all four-dimensional vectors, corresponding to $\alpha\beta$ axis components in positive and negative sequences; and $T$
any vector $\mathbf{x}_{\alpha\beta\mathbf{pn}}$ is defined as: $\mathbf{x}_{\alpha\beta\mathbf{pn}} = [\mathbf{x}_{\alpha\mathbf{p}}, \mathbf{x}_{\beta\mathbf{p}}, \mathbf{x}_{\alpha\mathbf{n}}, \mathbf{x}_{\beta\mathbf{n}}]^T$, $\mathbf{x}_{\alpha\mathbf{p}}$ is a positive sequence $\alpha$-axis component, $\mathbf{x}_{\beta\mathbf{p}}$ is a positive sequence $\beta$-axis component, $\mathbf{x}_{\alpha\mathbf{n}}$ is a negative sequence $\alpha$-axis component, and $\mathbf{x}_{\beta\mathbf{n}}$ is a negative sequence $\beta$-axis component.

4. The control system according to claim 2, wherein the virtual impedance $X_v$ is configured to mimic impedance of the generator:

in steady-state operation, the virtual impedance $X_v$ is 0 to 1 times of the rated impedance; and
in transient-state operation, the virtual impedance $X_v$ is increased to keep an internal potential stable.

5. The control system according to claim 2, further comprising an alternating voltage control unit AVR configured to realize alternating voltage regulation of a grid connection point of the converter and output a positive sequence d-axis component $E_{dp}$ of an internal potential, wherein a positive sequence q-axis component $E_{qp}$, a negative sequence d-axis component $E_{dn}$ and a negative sequence q-axis component $E_{qn}$ of the internal potential are 0.

6. The control system according to claim 2, further comprising a control error compensation unit configured to:

according to a deviation between the alternating voltage reference vector $\mathbf{Uc}_{\mathbf{dqpn}}$ and an actual alternating voltage vector $\mathbf{Uc}_{\mathbf{dppn\_m}}$ of the converter, generate a control error compensation value; and
add the control error compensation value to the alternating voltage reference vector $\mathbf{Uc}_{\mathbf{dqpn}}$ to obtain the alternating voltage reference vector of the converter.

7. The control system according to claim 6, further comprising a fault current limiting unit, wherein
the fault current limiting unit is activated during a transient overcurrent state to generate a fault current limiting control value according to a deviation between an alternating current limiting command and an actual alternating current of the converter, the fault current limiting control value is added to the alternating voltage reference vector $\mathbf{Uc}_{\mathbf{dqpn}}$ to serve as the alternating voltage reference vector of the converter, so as to control an alternating current amplitude to be a maximum alternating current amplitude limit $I_{max}$, and a direction thereof is 90 degrees behind a voltage drop of the virtual impedance $X_v$.

8. The control system according to claim 7, wherein the fault current limiting unit is configured to be activated for a short time during a transient overcurrent state, and the short time is specifically 1 ms-1 s.

9. The control system according to claim 1, wherein the control system is configured to be used for at least one of a DC transmission converter, an energy storage converter, a microgrid converter, a photovoltaic inverter and a wind power converter.

10. A converter control method, being configured to control a converter to mimic a synchronous generator, use the converter control system according to any one of claims 1-9, and comprise:

mimicking, by the power synchronization control unit, a speed controller and a mechanical inertia link of a generator to generate a reference phase;

acquiring, by the alternating voltage reference vector calculation unit, an internal potential vector and an alternating voltage vector to generate an alternating voltage reference vector; and

generating, by the alternating voltage command generation unit, a three-phase alternating voltage control command according to the alternating voltage reference vector and the reference phase;

wherein the internal potential vector is determined according to characteristics of the mimicked synchronous generator.

**11.** The control method according to claim 10, wherein the alternating voltage reference vector calculation unit is configured to:

according to a proportional coefficient $K_{rv}$, the internal potential vector $\mathbf{E_{dqpn}}$ and the alternating voltage vector $\mathbf{Us_{dqpn}}$, calculate the alternating voltage reference vector $\mathbf{Uc_{dqpn}}$:

$$\mathbf{Uc_{dqpn}} = \mathbf{E_{dqpn}} + K_{rv}(\mathbf{Us_{dqpn}} - \mathbf{E_{dqpn}})$$

the proportional coefficient $K_{rv}$ is determined according to a virtual impedance $X_v$ of the converter and a real impedance $X_r$ of the converter:

$$K_{rv} = \frac{X_v - X_r}{X_v}$$

the virtual impedance $X_v$ is used for simulating impedance of the generator; in steady-state operation, the virtual impedance $X_v$ is 0 to 1 times of a rated impedance; and in transient-state operation, the virtual impedance $X_v$ is increased to keep the internal potential stable.

**12.** The control method according to claim 10, wherein the alternating voltage reference vector calculation unit is configured to:

according to a proportional coefficient $K_{rv}$, the internal potential vector $\mathbf{E_{\alpha\beta pn}}$ and the alternating voltage vector $\mathbf{Us_{\alpha\beta pn}}$, calculate the alternating voltage reference vector $\mathbf{Uc_{\alpha\beta pn}}$:

$$\mathbf{Uc_{\alpha\beta pn}} = \mathbf{E_{\alpha\beta pn}} + K_{rv}\left(\mathbf{Us_{\alpha\beta pn}} - \mathbf{E_{\alpha\beta pn}}\right) ;$$

the proportional coefficient $K_{rv}$ is determined according to a virtual impedance $X_v$ of the converter and a real impedance $X_r$ of the converter:

$$K_{rv} = \frac{X_v - X_r}{X_v}$$

the internal potential vector $\mathbf{E_{\alpha\beta pn}}$, the alternating voltage vector $\mathbf{Us_{\alpha\beta pn}}$ and the alternating voltage reference vector $\mathbf{Uc_{\alpha\beta pn}}$ are all four-dimensional vectors, corresponding to $\alpha\beta$ axis components in positive and negative sequences; and

any vector $\mathbf{x_{\alpha\beta pn}}$ is defined as: $\mathbf{x_{\alpha\beta pn}} = [\mathbf{x_{\alpha p}}, \mathbf{x_{\beta p}}, \mathbf{x_{\alpha n}}, \mathbf{x_{\beta n}}]^T$, $\mathbf{x_{\alpha p}}$ is a positive sequence $\alpha$-axis component, $\mathbf{x_{\beta p}}$ is a positive sequence $\beta$-axis component, $\mathbf{x_{\alpha n}}$ is a negative sequence $\alpha$-axis component, and $\mathbf{x_{\beta n}}$ is a negative sequence $\beta$-axis component.

**13.** The control method according to claim 10, further comprising:

realizing, by an alternating voltage control unit AVR, alternating voltage regulation of a grid connection point of the converter and outputting a positive sequence d-axis component $E_{dp}$ of an internal potential, and a positive sequence q-axis component $E_{qp}$, a negative sequence d-axis component $E_{dn}$ and a negative sequence q-axis component $E_{qn}$ of the internal potential are 0.

**14.** The control method according to claim 11, further comprising performing the following operations by a control error compensation unit:

according to a deviation between the alternating voltage reference vector $Uc_{dqpn}$ and an actual alternating voltage vector $Uc_{dppn\_m}$ of the converter, generating a control error compensation value; and

adding the control error compensation value to the alternating voltage reference vector $Uc_{dqpn}$ to obtain the alternating voltage reference vector of the converter.

15. The control method according to claim 14, further comprising:
activating a fault current limiting unit during a transient overcurrent state to generate a fault current limiting control value according to a deviation between an alternating current limiting command and an actual alternating current of the converter, which is added to the alternating voltage reference vector $Uc_{dqpn}$ to serve as the alternating voltage reference vector of the converter, so as to control an alternating current amplitude to be a maximum alternating current amplitude limit Imax, wherein a direction thereof is 90 degrees behind a voltage drop of the virtual impedance $X_v$.

16. The control method according to claim 15, wherein the fault current limiting unit is configured to be activated for a short time during a transient overcurrent, and the short time is specifically 1 ms-1 s.

17. A program product, comprising the converter control system according to any one of claims 1-9.

18. An electronic device, comprising the program product according to claim 17.

Fig. 1a

$$Uc_{abc} = (Uc_{dp} + jUc_{qp})\ e^{j\theta}$$
$$+ (Uc_{dn} + jUc_{qn})\ e^{-j\theta}$$

Fig. 1b

Fig. 2

Fig. 3a

Fig. 3b

Fig. 4

Fig. 5

Fig. 6

```
                        ╭─────────────────────────────╮
                        │            Start            │
                        ╰─────────────────────────────╯
                                       │
                                       ▼
      ┌──────────────────────────────────────────────────────────────┐
      │ 701: a power synchronization control unit generates a reference│
      │                          phase θ                              │
      └──────────────────────────────────────────────────────────────┘
                                       │
                                       ▼
      ┌──────────────────────────────────────────────────────────────┐
      │    702: an alternating voltage control unit calculates an      │
      │  alternating voltage reference vector of the converter $Uc_{dqpn}$ │
      └──────────────────────────────────────────────────────────────┘
                                       │
                                       ▼
      ┌──────────────────────────────────────────────────────────────┐
      │ 703: an alternating voltage command generation unit generates  │
      │       a three-phase alternating voltage control command        │
      └──────────────────────────────────────────────────────────────┘
```

## Fig. 7

Fig. 8a

Fig. 8b

**INTERNATIONAL SEARCH REPORT**

International application No.

**PCT/CN2022/141977**

| A. | CLASSIFICATION OF SUBJECT MATTER |
|---|---|

H02J3/38(2006.01)i

According to International Patent Classification (IPC) or to both national classification and IPC

| B. | FIELDS SEARCHED |
|---|---|

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 南京南瑞继保, 变流器, 虚拟同步发电机, 参考向量, 电压, 虚拟阻抗, 振荡, 震荡, 闭环, 调速, 惯性, 内电势, VSG, virtual, voltage, generator, resistance, converter

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 105896614 A (XJ GROUP CORP. et al.) 24 August 2016 (2016-08-24)<br>entire document | 1-18 |
| A | CN 106130424 A (XI'AN JIAOTONG UNIVERSITY) 16 November 2016 (2016-11-16)<br>entire document | 1-18 |
| A | WO 2021176746 A1 (TOKYO ELECTRIC POWER COMPANY HOLDINGS, INC., et al.)<br>10 September 2021 (2021-09-10)<br>entire document | 1-18 |
| A | CN 112217239 A (ZHENGZHOU UNIVERSITY OF LIGHT INDUSTRY) 12 January 2021<br>(2021-01-12)<br>entire document | 1-18 |
| A | CN 108390396 A (HEFEI UNIVERSITY OF TECHNOLOGY) 10 August 2018 (2018-08-10)<br>entire document | 1-18 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 March 2023** | **14 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT

International application No.

**PCT/CN2022/141977**

### C. DOCUMENTS CONSIDERED TO BE RELEVANT

| Category* | Citation of document, with indication, where appropriate, of the relevant passages | Relevant to claim No. |
|---|---|---|
| A | 尚磊 等 (SHANG, Lei et al.). "电网对称故障下虚拟同步发电机建模与改进控制 (Modeling and Improved Control of Virtual Synchronous Generators Under Symmetrical Faults of Grid)" 中国电机工程学报 (Proceedings of the CSEE), Vol. 37, No. 02, 20 January 2017 (2017-01-20), entire document | 1-18 |
| A | 肖湘宁 等 (XIAO, Xiangning et al.). "不平衡电压下虚拟同步发电机功率控制策略 (Power Control of Virtual Synchronous Generator Under Unbalanced Grid Voltage)" 电力自动化设备 (Electric Power Automation Equipment), Vol. 37, No. 08, 10 August 2017 (2017-08-10), sections 0 and 1 | 1-18 |

Form PCT/ISA/210 (second sheet) (July 2022)

**INTERNATIONAL SEARCH REPORT**
Information on patent family members

International application No.

**PCT/CN2022/141977**

| Patent document cited in search report | | | Publication date (day/month/year) | Patent family member(s) | | | Publication date (day/month/year) |
|---|---|---|---|---|---|---|---|
| CN | 105896614 | A | 24 August 2016 | None | | | |
| CN | 106130424 | A | 16 November 2016 | None | | | |
| WO | 2021176746 | A1 | 10 September 2021 | JPWO | 2021176746 | A1 | 10 September 2021 |
| | | | | AU | 2020433062 | A1 | 20 October 2022 |
| CN | 112217239 | A | 12 January 2021 | None | | | |
| CN | 108390396 | A | 10 August 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106786733 B
- CN 106356884 B
- CN 107528495 B